# EUROPÄISCHE PATENTANMELDUNG

(11) **EP 1 782 941 A2**
(43) Veröffentlichungstag der Anmeldung: **09.05.2007**
(21) Anmeldenummer: 06019974.2
(22) Anmeldetag: 25.09.2006
(51) Int. Cl.: B29C 70/58, B29C 70/88

(54) **Kunststofferzeugnis zur Wärmeerzeugung und Wärmeerhaltung**

(30) Priorität: 03.11.2005 DE 102005052839
(71) Anmelder: GRAFE Color Batch GmbH, 99444 Blankenhain (DE)
(72) Erfinder: Caro, Carlos, Dr., 99425 Weimar (DE)
(74) Vertreter: Oehmke, Volker

(57) **Zusammenfassung**

Die Erfindung betrifft ein Kunststofferzeugnis zur Wärmeerzeugung und Wärmeerhaltung und dessen Anwendung als Verpackungs-, Bedachungs- oder Be-/Abdeckungsmaterial für geerntete, gelagerte und/oder angebaute Naturprodukte, freiliegenden Flächen und starren Strukturen in der Land- und Forstwirtschaft. Der Erfindung liegt die Aufgabe zugrunde, ein Kunststofferzeugnis anzugeben, das in der Lage ist, die im UV-, VIS und NIR-Bereich des Lichtspektrums gespeicherten Energie in Wärme umzuwandeln (Wärmeumwandlung) sowie die vorher aufgenommene Wärme längere Zeit zu behalten und optimal zu transportieren (Wärmeerhaltung). Die Aufgabe wurde gelöst, indem bei der Herstellung eines thermoplastischen Erzeugnisses ein Granulatkonzentrat, das Zirkoniumcarbid zwischen 0,1 Gew% und 20 Gew% enthält, zugegeben wird. Das ZrC absorbiert die Lichtenergie der Strahlung unterhalb 3000 nm und wandelt sie in Wärme um, die den Wärmeeffekt dadurch weiterverstärkt, dass oberhalb 3000 nm die Wärme im FIR-Bereich zurückreflektiert wird.

## Beschreibung

Die Erfindung betrifft die Verbesserung der thermischen Eigenschaften (Wärmeleitfähigkeit) von Kunststoffen, speziell Kunststofferzeugnisse zur Wärmeerzeugung und Wärmeerhaltung. Insbesondere betrifft die vorliegenden Erfindung die Lagerung, Verpackung und den Anbau von Naturprodukten in der Landwirtschaft und im Forstbereich.

Es gibt eine Reihe von Methoden und Materialien, die zur Erhöhung der thermischen Leitfähigkeit von thermoplastischen Kunststoffen bereits verwendet werden können. Das Beladen des Polymers mit Füllstoffen hoher Wärmeleitfähigkeit gehört dazu. In Frage kommen Metalle der 3. und 4. Nebengruppenelemente des Periodensystems, Legierungen des Kupfers, Zinns und Aluminiums, Metall- und Mischoxide des Aluminiums, Siliziums, Magnesiums und Calziums, Darüber hinaus können kommerziell verfügbare Aluminium-Pasten, Leitruße, Graphite und spezielle Keramiken vom Typ des Aluminiums, Bornitrids und Siliziumcarbid verwendet werden.
Die verwendeten Füllstoffe unterscheiden sich untereinander durch ihre thermische Leitfähigkeit. Die Wärmeleitfähigkeit der hergestellten Composite kann deshalb sowohl über die Auswahl des Füllstoffs als auch über den Volumenfüllgrad gesteuert werden.
Um die Wärmeleitfähigkeit eines Polymerwerkstoffes zu verbessern, muss man deshalb in erster Linie folgende Punkte fokussieren:
- Wärmeleitfähigkeit des Matrixpolymers: Hier hat sich EVA als vorteilhaft wegen Kosten, Beschaffung, Verarbeitung und thermischen Eigenschaften erwiesen.
- Wärmeleitfähigkeit des Füllstoffs: Viele Materialmöglichkeiten wurden bereits erwähnt.
- Volumenfüllgrad des Füllstoffs in der Polymermatrix: Generell müssen hohe Füllgrade eingesetzt werden, um den gewünschten Effekt zu erzielen.

In seiner Dissertation am Lehrstuhl für Polymerwerkstoffe der Friedrich-Alexander-Universität Erlangen-Nürnberg, "Erhöhung der thermischen Leitfähigkeit elektrisch isolierender Polymerwerkstoffe", 2002, hatte Wolfgang Übler nach Möglichkeiten gesucht, die Wärmeleitfähigkeit von Polymerwerkstoffen für elektrotechnische Anwendungen signifikant zu erhöhen. Motivation war, die Verlustwärme von Maschinenteilen über geeignete Materialien optimal abzuführen. Diese Materialien sollen zwar elektrisch isolierend jedoch gut thermisch leitfähig sein.
Eine weitere Anwendung solcher Polymerwerkstoffe liegt bei der Herstellung von Rohren und sonstigen Leitungen, wo eine hohe Wärmeleitung der umgebenden Kunststoffummantelung zusätzlich erwünscht wird.
Es gibt darüber hinaus wichtige Textilanwendungen, wo die entstehende Körperwärme entweder durch passive oder aktive Materialien isoliert werden soll. Beispiele für den passiven Schutz sind Textilien aus Wolle, die durch eine innere Luftschicht die Wärme isolieren.
Beispiele für den aktiven Schutz sind wärmeerzeugende und -isolierende Fasern hergestellt aus Keramik-Composites. Bei Erwärmung strahlen keramische Materialien FIR-Strahlung ab. Diese haben eine hohe Eindringtiefe in andere Materialien und können sie dadurch auch erhitzen.

Dem Stand der Technik ist zu entnehmen, dass die Elemente der 3. und 4. Nebengruppe des Periodensystems sich als optimale Beschichtungsmaterialien für Wärmetauscher in Solarzellen herausgestellt haben, im Vergleich zu den üblichen schwarzbeschichteten Materialien, die hohe Wärmeverluste an die Umgebung aufweisen.

Zirkonium- und Magnesiumoxid oder Eisenoxid könnten in synthetische Fasern eingebracht werden und zu einem Wärmeeffekt beitragen, da sie bei einer Temperatur von 36° C im FIR-Bereich (von 8 bis 14 Mikrometer) ca. 60 Megawatt Wärme abstrahlen können. Sie sind deshalb für Sportbekleidung interessant.

Wissenschaftler haben Mikropartikel des ZrC in PA- und PET-Faser integriert, um aktive Isoliertextilmaterialien zu entwickeln.
Zirkoniumcarbid (ZrC) speichert die Wärme, indem die Energie des Lichtes aus dem sichtbaren Bereich des Spektrums unterhalb 3000 nm in Wärme umgewandelt wird, bei gleichzeitiger Reflexion der langwelligen, wärmeenthaltenden IR-Strahlung oberhalb 3000 nm.

Da der Bereich unterhalb 3000 nm fast 95% der gesamten einfallenden Solarenergie enthält, kann später eine Umwandlung dieser Strahlung in Wärmeenergie von erheblichem Vorteil sein.

Beim Anbau von Bleichspargel, wie er in Deutschland stattfindet, müssen die dabei verwendeten Folien eine bestimmte Effizienz zeigen, wenn es darum geht, Bleichspargel so früh im April zu ernten und gleichzeitig die Verfärbung der Spargelspitzen zu verhindern. Die Ernteverfrühung müsste auch mit einer Erhöhung der geernteten Menge einhergehen.

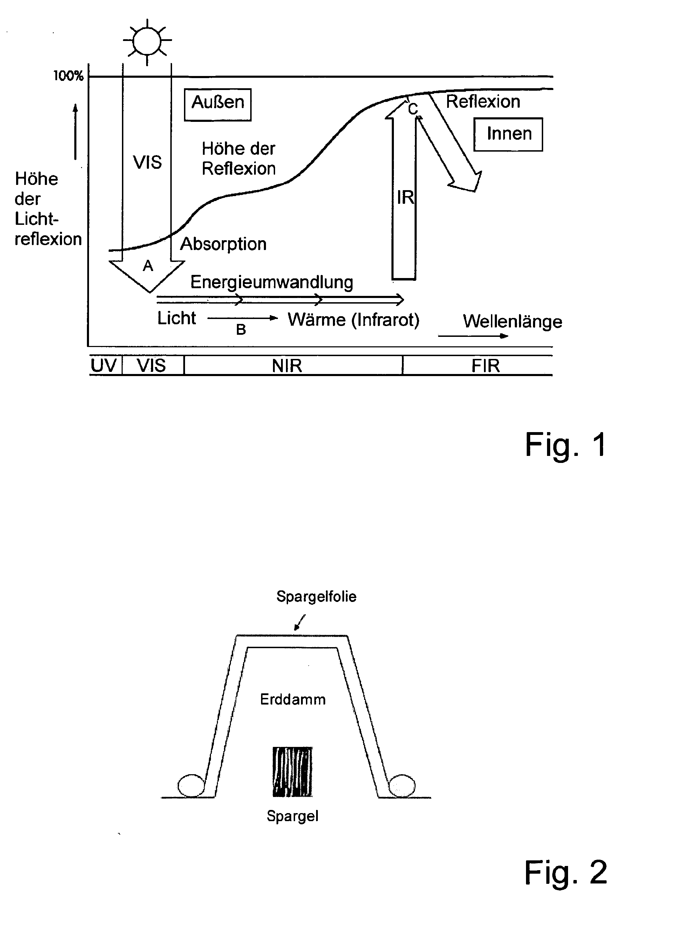

Da die Temperatur im Erddamm das Wachstum von Bleichspargel stark beeinflusst, müssen alle Bemühungen darauf gerichtet sein, die Hitze für einen längeren Zeitraum möglichst hoch zu halten, wenn die Außentemperaturen sehr viel niedriger liegen. Die verschiedenen Spargelfolien erreichen entweder eine ungehinderte Transmission von Wärme, wodurch sich der Boden erwärmen würde (bei transparenten Folien) oder die Aufnahme und die Abgabe dieser Wärme an den Boden (bei schwarzen Folien). Die neueste Generation von Spargelfolien besteht aus einer Kombination von verschiedenen Folienschichten (Transparent-Schwarz-Weiß), wo zwischen transparenter und schwarzer Folie ein zusätzliches Luftpolster eingelassen wird. Die transparente Folie erlaubt den ungehinderten Zugang von Wärmestrahlung und deren Aufnahme durch die schwarze Schicht, aber noch wichtiger, sie behält die aufgenommene Energie länger, so dass bei Nacht oder an kühleren Tagen die Temperatur sich nicht so stark reduziert wie am Tag. Man macht sich in diesem Fall die isolierende Wirkung von Luft sowie ihre geringe Wärmeleitung zu Nutze. Diese Folie ist dadurch einer gleichgebauten Schwarz/Weiß-Folie ohne Luftpolster überlegen (siehe Fig. 1).

Der Erfindung liegt die Aufgabe zugrunde, ein Kunststofferzeugnis anzugeben, das in der Lage ist, die im UV-, VIS- und NIR-Bereich des Lichtspektrums gespeicherte Energie in Wärme umzuwandeln (Wärmeumwandlung), sowie die vorher aufgenommene Wärme längere Zeit zu behalten und optimal zu transportieren (Wärmeerhaltung).
Die Aufgabe wurde gelöst, indem bei der Herstellung einer Folie aus Standardmaterialien wie PE und/oder EVA ein Granulatkonzentrat, das ZrC zwischen 0,1 Gew% und 20 Gew% enthält, zugegeben wird. Das ZrC in der Folie absorbiert die Lichtenergie der globalen Strahlung unterhalb 3000 nm und wandelt sie in Wärme um, dadurch wird der Wärmeeffekt weiterverstärkt, weil oberhalb 3000 nm die Wärme im FIR-Bereich zurückreflektiert wird. Das Ergebnis ist, dass die darunter liegende Erde zusätzlich erwärmt wird.

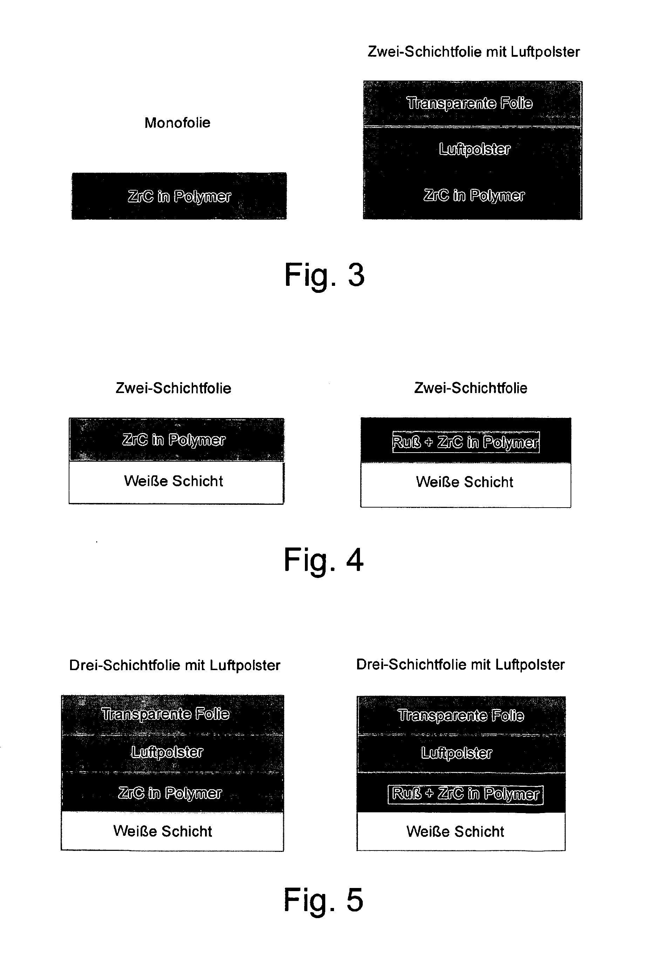

Diese abgegebene Wärme ist viel höher als die Wärme, die eine schwarze Folie unter den gleichen Bedingungen speichern und abgeben kann. Dies wird durch die Messung einer höheren Temperatur aus der Erde bestätigt. Darüber hinaus verhindert das ZrC, dass die Wärme, die aus der Erde kommt und im Normalfall abgestrahlt wird, verloren geht. Dies geschieht, weil die FIR-Strahlung wieder zurückreflektiert wird.
Somit erfüllt z.B. eine mit ZrC gefüllte Folie, die als Spargelfolie zur Abdeckung von Erddämmen eingesetzt wird, gleichzeitig die gleichen Funktionen wie ein zwischen einer transparenten und einer schwarzen Folie befindliches Luftpolster zur Reflektion von Wärmestrahlung sowie zusätzlich die Funktionen einer schwarzen Folie zum Speichern von Wärme.
Verschiedene Variationen sind möglich, wie ZrC in einer Folie auf dem Spargelfeld gemäß Fig. 2 eingesetzt werden könnte. Sie werden in den Figuren 3 bis 5 schematisch dargestellt und beziehen sich immer auf ZrC als aktive Komponente in der Beispielfolie:
a) allein als Monofolie mit ZrC, erfindungsgemäß als aktive Komponente, mit und ohne Luftpolster gemäß Fig. 3
b) denkbar auch ZrC, erfindungsgemäß als aktive Komponente, allein oder zusammen mit Ruß, jedoch alle zusammen in Verbindung mit einer normalen weißen Schicht gemäß Fig. 4
c) denkbar auch ZrC, erfindungsgemäß als aktive Komponente, allein oder zusammen mit Ruß, jedoch alle zusammen in Verbindung mit einer normalen weißen Schicht, mit Luftpolster zwischen einer transparenten Folie und der dunklen Folie aus ZrC oder Ruß/ZrC gemäß Fig. 5.

Die Zugabe von ZrC in eine Schicht, die bereits Ruß enthält, soll dazu dienen, die möglicherweise hohen Konzentrationen von ZrC dadurch zu umgehen, dass die Effekte von Ruß und ZrC gebündelt werden. Der Effekt ist in jedem Fall geringer als beim Einsatz einer reinen ZrC-haltigen Schicht ohne Ruß, jedoch möglicherweise je nach Pflanzentyp, Anbaubedingungen und Zielvorhaben ausreichend. Das Ziel ist hauptsächlich, Rohstoff einzusparen sowie die Maschinenteile im Extrusionsprozess gegen die starke Abrasionskraft des ZrC zu entlasten.

Die Kombination von ZrC-Folie und einer weißen Schicht soll dazu dienen, die Folie nicht nur zur Ernteverfrühung sondern auch zur Erntesteuerung zu verwenden. An sonnigen heißen Tagen kann demzufolge die weiße Schicht nach oben gelegt werden und somit die Wärmestrahlung reflektieren. Weiterhin würde durch die Anwendung von ZrC die Wärme im Erddamm erhalten bleiben, selbst in den kälteren Abend- und Nachtstunden.

Die Verwendung eines Luftpolsters in Verbindung mit einer ZrC-Folie soll nur synergetische Wirkung haben. Für das Gelingen der Erfindung ist eigentlich nur die Präsenz von ZrC ohne Luftpolsterschicht ausreichend, um dadurch die Wärme längerfristig zu erhalten.
Das ZrC ist per natura in der Lage, Strahlung im FIR-Bereich zu reflektieren. Diese Strahlung hat eine Wellenlänge von über 3 Mikrometer. Das Luftpolster macht sich die geringe Wärmeleitung von Luft zu Nutze, um die Wärme im Erddamm soweit zu erhalten, dass sie nicht verschwindet. Ein ähnlicher Effekt ist auch bei den Lufthohlkörpern in Textilien aus Wolle zu finden.

Für die Herstellung der Folie können weitere Additive beigemischt werden, um den Produktionsprozess zu optimieren, die Eigenschaften des Polymers zu verbessern oder die Lebensdauer der Folie zu verlängern.
Diese Zuschlagstoffe können aus Substanzen aus der folgenden Liste entnommen werden:
Thermostabilisatoren, Antioxydantien, Antifog (Anti-Tau)-Mittel, UV-Stabilisatoren, UV-Absorber, Gleitmittel, IR-Absorber, Antistatika, anorganische Füllstoffe, Light-Diffuser, Schlagzähmodifikatoren, Flammschutzmittel, Farbmittel, Pigmente und Antiblock-Mittel.
Die Substanzklassen sind bereits Stand der Technik und stehen dem Fachmann in ausreichenden Literaturquellen zur Einsicht bereit.

Die erfindungsgemäß verstärkte Folie kann deshalb generell als Bedachungs- oder Bedeckungsmaterial von freiliegenden Flächen und starren Strukturen wie Gewächshäusern oder Tunnel in der Land- und Forstwirtschaft verwendet werden.

Eine weitere Anwendung einer Folie, die erfindungsgemäß ZrC enthält, ist die Verpackung von Maschinenteilen und Naturmaterialien, wie zum Beispiel Brennholz und Torf, die entweder einen hohen Gehalt an Feuchtigkeit aufweisen, Feuchtigkeit aus der Umgebung anziehen oder auch selbst sehr empfindlich gegenüber Feuchtigkeit sind und zusätzlich unter freiem Himmel gelagert werden müssen.

Brennholz zum Beispiel enthält 70 bis 80% Feuchtigkeit und müsste in der Regel 2 bis 3 Jahre gelagert werden, um ein akzeptables Brennverhalten zu zeigen. Der physikalische Hintergrund für eine Erhöhung des Wärmeeffektes innerhalb einer derartigen Verpackung liegt in der Zunahme der Löslichkeit von Wasser an der Luft bei steigender Temperatur. Daher bemüht man sich um höhere Temperaturen, damit das Wasser aus den Materialien herauskommt und an die Luft übergeht.
Es existieren zwar solarbetriebene Holztrocknungsanlagen, die jedoch alle mangels Alternative eine transparente Folie aus EVA verwenden.
Diese Materialien können mit einer erfindungsgemäßen Folie, entweder einer monoschichtigen Folie mit ZrC als wirksame Komponente oder einer Folie bestehend aus einer transparenten Folie, einer Luftschicht dazwischen und der Folie mit ZrC, verpackt werden. Die Materialien sind gegen Regen geschützt. Bei sonnigen oder an normalen Tagen wird die Lichtenergie (UV-VIS-NIR) unterhalb 3 Mikrometer (>3000 nm) absorbiert und als Wärme umgewandelt ins Innere abgegeben. Die FIR-Anteile (oberhalb 3000 nm oder 3 Mikrometer) werden zurückreflektiert, so dass die Wärme nicht nur im Inneren der Verpackung erhalten bleibt, sondern sogar verstärkt wird. Eine gute Regulierung des Kondensationsverhaltens würde einen Treibhauseffekt im Inneren zur Beschleunigung des Trocknungsprozesses begünstigen und kontrollieren.

Weiterhin kann man eine erfindungsgemäß verstärkte Folie als Verpackungsmaterial bei der Lagerung von Lebensmitteln verwenden, um den Feuchtigkeitsanteil von Lebensmitteln zu reduzieren sowie die Geschwindigkeit von Fäulnisprozessen zu verlangsamen.

## Patentansprüche

1. Verwendung von Kunststofferzeugnissen, die unterhalb einer Wellenlänge von 3 Mikrometer die Strahlung aus den UV-, VIS- und NIR-Bereichen in Wärmeenergie umwandeln und oberhalb einer Wellenlänge von 3 Mikrometer die Strahlung aus dem FIR-Bereich reflektieren, als Bedeckungsmaterial für freiliegende Erdflächen, als Bedachungsmaterial von starren Strukturen in der Land- und Forstwirtschaft oder als Verpackungsmaterial von angebauten, geernteten oder gelagerten land- oder forstwirtschaftlichen Naturprodukten.

2. Kunststofferzeugnis nach Anspruch 1, **dadurch gekennzeichnet,**
**dass** mindestens ein thermoplastisches Polymer, eine Carbid-Verbindung von Übergangsmetallen und eine der folgenden Substanzen oder Substanzklassen enthalten sind:
Ruß, Titandioxid, Bariumsulfat, Kaolin, Glimmer, Kalziumkarbonat, Schichtsilicate, Cristobalit, Wachse, Dispergierhilfsmittel, Thermostabilisatoren, Antioxydantien, Antifog (Anti-Tau)-Mittel, UV-Stabilisatoren, UV-Absorber, Gleitmittel, Antistatika, Schlagzähmodifikatoren, Farbmittel, Pigmente, Flammschutz- und Antiblock-Mittel.

3. Kunststofferzeugnis nach Anspruch 2, **dadurch gekennzeichnet,**
**dass** die Carbid-Verbindung ein Zirkoniumcarbid (ZrC) ist.

4. Kunststofferzeugnis nach Anspruch 1 bis 3, **dadurch gekennzeichnet,**
**dass** es vollständig oder teilweise unter Verwendung eines Compounds- oder Masterbatch-Granulats hergestellt ist.

5. Kunststofferzeugnis nach Anspruch 1, **dadurch gekennzeichnet,**
**dass** es aus Recyclaten unter vollständiger oder teilweiser Wiederverwendung der in den Ansprüchen 1 bis 4 genannten Ausgangssubstanzen hergestellt ist.
